Europäisches Patentamt

European Patent Office

Office européen des brevets

(19)

(11) Numéro de publication : **0 406 146 B1**

(12) **FASCICULE DE BREVET EUROPEEN**

(45) Date de publication du fascicule du brevet :
28.07.93 Bulletin 93/30

(51) Int. Cl.⁵ : **B29C 49/64, // B29K67:00**

(21) Numéro de dépôt : **90470041.6**

(22) Date de dépôt : **25.06.90**

(54) **Procédé de fabrication de récipients en polyéthylénetéréphtalate destinés au remplissage avec un liquide chaud.**

(30) Priorité : **29.06.89 FR 8908865**

(43) Date de publication de la demande :
**02.01.91 Bulletin 91/01**

(45) Mention de la délivrance du brevet :
**28.07.93 Bulletin 93/30**

(84) Etats contractants désignés :
**AT BE CH DE ES GB GR IT LI LU NL**

(56) Documents cités :
**EP-A- 0 280 742**
**FR-A- 2 130 670**
**GB-A- 2 009 029**
**GB-A- 2 055 672**
**GB-A- 2 195 287**
**PATENT ABSTRACTS OF JAPAN, vol. 5, no. 72 (M-68)[744], 14 mai 1981; & JP-A-56 021 833 (MITSUBISHI RAYON) 28-02-1981**
**PATENT ABSTRACTS OF JAPAN, vol. 7, no. 95 (M-209)[1240], 21 avril 1983; & JP-A-58 018 230 (DAINIPPON INK) 02-02-1983**

(56) Documents cités :
**PATENT ABSTRACTS OF JAPAN, vol. 5, no. 143 (M-87)[815], 9 septembre 1981; & JP-A-56 075 833 (TORAY) 26-06-1981**
**JAPANESE PATENTS GAZETTE, semaine B28, 22 août 1979, section Ch, classe A, page 2, résumé no. 51356B/28, Derwent Publications Ltd, Londres, GB; & JP-A-54 066 968 (YOSHINO KOGYOSHO) 29-05-1979**

(73) Titulaire : **SIDEL**
**55, rue du Pont VI**
**F-76600 Le Havre (FR)**

(72) Inventeur : **Denis, Gérard**
**22 rue Georges Pompidou**
**F-76280 Turretor (FR)**
Inventeur : **La Barre, Paul**
**21 rue Joseph Cambon**
**F-76310 Sainte Adresse (FR)**
Inventeur : **Rius, Jean-Michel**
**Chemin vicinal No. 2, Les Beaux Sites**
**F-76290 Maneglise (FR)**

(74) Mandataire : **Gorree, Jean-Michel et al**
**Cabinet Plasseraud 84, rue d'Amsterdam**
**F-75009 Paris (FR)**

## Description

La présente invention a pour objet un procédé de fabrication de récipients en polyéthylénetéréphtalate (PET), à partir de préformes creuses comportant une extrémité ouverte, aptes à supporter en cours d'utilisation, sans déformation notable, des conditions thermiques relativement sévères, telles que celles rencontrées lors de leur remplissage avec un liquide chaud.

Dans le domaine de l'emballage, les récipients en PET biorienté sont actuellement largement utilisés pour le conditionnement de boissons gazeuses ou non, de jus, de sauces. Ceci est dû au fait que le PET biorienté présente une bonne résistance mécanique, un bel aspect, une grande inertie chimique vis à vis des produits contenus dans les récipients et qu'il forme une barrière efficace aux gaz contenus dans les liquides et à l'oxygène de l'air (conservation des produits contenus sans oxydation).

On sait que les récipients en PET biorienté, obtenus par étirage et soufflage d'une préforme portée à la température de biorientation du PET, présentent, lorsqu' ils sont portés à une température supérieure à la température de transition vitreuse (Tg) du PET, un retrait important qui les rend impropres au remplissage à chaud.

Ce retrait est dû au fait que les contraintes internes créées dans le matériau lors de sa biorientation (étirage longitudinal plus soufflage provoquant un étirage transversal) sont libérées lorsque le récipient est porté à une température supérieure à la température de transition vitreuse (Tg) du matériau.

A ce sujet, il est bien connu que la stabilité thermique des récipients en PET biorienté, obtenus par étirage-soufflage, est accrue de façon significative par un traitement thermique connu communément sous le nom de thermofixation. Dans ce procédé, une préforme préchauffée jusqu'à une température convenable pour l'orientation est étirée biaxialement dans un moule de soufflage pour former un récipient.

Ensuite, alors que ce dernier est encore en contact avec les parois du moule de soufflage, il est porté à une température plus élevée durant un certain temps, ce qui lui fait subir une thermofixation.

Enfin, le récipient, maintenu sous pression afin de résister au retrait dû à la température, est refroidi jusqu'à une température à laquelle il maintient sa forme lorsqu'il n'est pas sous pression. D'après les nombreuses publications traitant de la thermofixation, les températures convenables pour mettre en oeuvre ce traitement thermique sont comprises entre 140°C et 250°C.

On connaît encore un procédé selon lequel une préforme chauffée jusqu'à une température d'orientation biaxiale est soufflée dans un moule chaud et maintenue en contact avec les parois de celui-ci. La température des parois peut être de 40°C supérieure à la température minimum d'orientation. Dans un premier mode de réalisation, le récipient moulé résultant est refroidi modérèment en faisant chuter sa température de 10 à 30°C par introduction d'un fluide de refroidissement à l'intérieur du récipient. Puis, le récipient refoidi est extrait du moule de soufflage. Dans un second mode de réalisation, on laisse le récipient obtenu se rétracter librement à l'intérieur du moule en effectuant une décompression partielle ou totale du fluide de soufflage, puis on le souffle à nouveau dans le même moule chaud ou dans un autre moule refroidi. Le récipient est ensuite extrait du moule. Selon des exemples de réalisation de ce procédé, l'étirage-soufflage de préformes en polyéthylénetéréphtalate (PET) est effectué à 95°C dans un moule chaud dont la température, qui est toujours supérieure à la température des préformes, est comprise entre 110 et 140°C. Les temps de contact du récipient moulé avec les parois du moule chaud sont de l'ordre de 10 secondes.

Ces procédés connus présentent des inconvénients tels que l'utilisation de moules à température élevée (jusqu'à 250°C), des temps de séjour importants dans le moule de soufflage, l'utilisation de plusieurs moules successifs, l'utilisation de fluides de refroidissement onéreux. Il en résulte que ces procédés sont difficiles à mettre en oeuvre de façon industrielle et ont de faibles cadences de production de récipients.

La présente invention a donc pour but de remédier aux inconvénients exposés ci-avant et de proposer un procédé qui permette la production industrielle de récipients en PET résistants à la chaleur sans déformation notable.

A cet effet, l'invention a pour objet un procédé de fabrication de récipients en polyéthylénetéréphtalate (PET), à partir de préformes creuses comportant une extrémité ouverte et une extrémité fermée, aptes à supporter sans déformation notable des conditions thermiques relativement sévères telles que celles rencontrées lors du remplissage avec un liquide chaud, ce procédé comprenant la succession des étapes suivantes :

a) on chauffe rapidement le corps d'une préforme en PET amorphe de façon à ce qu'il atteigne une température de 120 à 140°C à laquelle un étirage longitudinal et un étirage transversal n'induisent pas de contrainte dans le matériau constituant le récipient, le col de la préforme déjà conformé à sa forme et à ses dimensions défitives n'étant pas chauffé;

b) on transfère la préforme chaude dans un moule dont les parois de la cavité de moulage sont chauffées et maintenues à une température inférieure à celle du corps de la préforme;

c) on étire longitudinalement la préforme, avec une vitesse d'étirage faible inférieure à 500 mm/seconde, ajustée pour induire le moins de contraintes possibles dans le matériau, et on l'expanse simultanément

2

par soufflage au moyen d'un fluide gazeux sous pression, en général de l'air, de façon à ce qu'elle épouse la forme de la cavité de moulage pour former un récipient ;

d) on évacue rapidement du récipient moulé le fluide gazeux sous pression ;

e) enfin, on extrait du moule le récipient fabriqué.

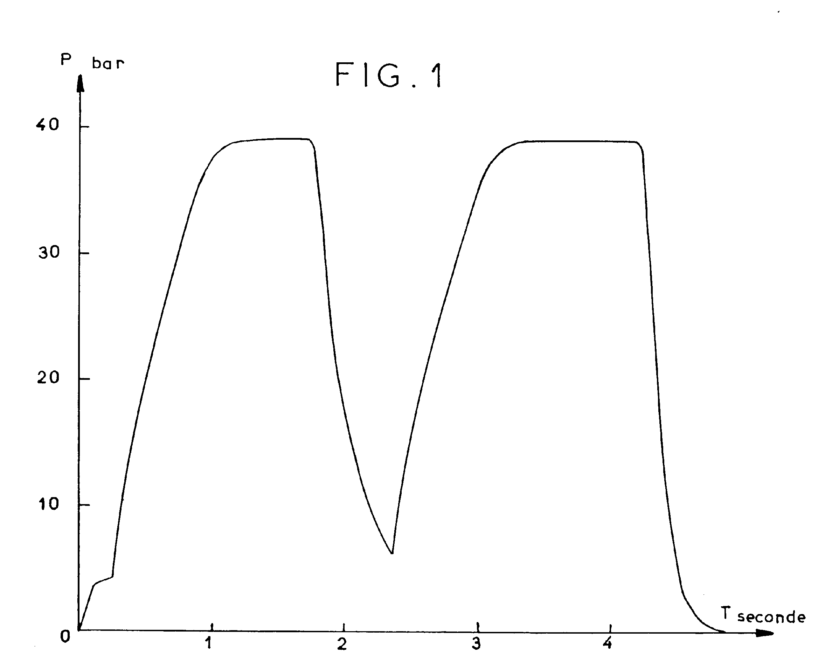

D'autres caractéristiques et avantages de l'invention apparaîtront à la lecture de la description qui va suivre, donnée à titre d'exemple non limitatif, faite en référence aux dessins annexés parmi lesquels les figures 1, 2 et 3 représentent des courbes montrant les variations de la pression de soufflage en fonction du temps pour trois modes de mise en oeuvre du procédé suivant l'invention.

Comme cela a déjà été exposé, les récipients fabriqués en résines polyester saturées biorientées présentent un retrait important lorsqu'ils sont portés à des températures supérieures à la température de transition vitreuse (Tg) de la résine. Ce retrait est dû au fait que les contraintes internes induites dans la résine polyester lors de sa biorientation sont libérées lorsque les récipients sont portés à une température supérieure à Tg.

Le procédé selon l'invention est fondé sur le fait que l'on évite de biorienter le matériau constituant les récipients lors de leur fabrication à partir de préformes. Ainsi, on ne crée pratiquement pas de contraintes internes causes du retrait. Il en résulte que les récipients obtenus par ce procédé ne présentent pas de déformation notoire lorsqu'ils sont portés à une température supérieure à Tg, notamment lors du remplissage avec un liquide dont la température atteint et même dépasse 85°C.

Afin de ne pas induire de biorientation dans le matériau constituant les récipients, les dispositions suivantes sont prises :

a) on effectue un étirage longitudinal et un soufflage de préformes qui ont été préchauffées à une température suffisamment élevée pour que ces deux opérations n'induisent pas de biorientation, donc de contraintes, dans le matériau constituant les récipients.

b) on met en jeu un taux de biétirage relativement faible lors de la transformation par étirage-soufflage des préformes en récipients (taux de biétirage = taux d'étirage longitudinal x taux d'étirage transversal provoqué par le soufflage).

c) on ajuste la vitesse d'étirage longitudinal de façon à induire le moins de contraintes possible dans le matériau lors du moulage.

Plus précisément, pour une résine polyester saturée tel que le PET, les valeurs suivantes ont été adoptées :

- les corps des préformes, à l'exception des cols qui sont déjà conformés à leurs formes et dimensions définitives, sont portés rapidement, au moyen d'un four de rayonnement infrarouge, à une température comprise entre 120 et 140°C, la durée du chaufage étant inférieure à une minute, de préférence de 40 secondes environ.

De plus, pour que la température du matériau constituant les préformes ne diminue pas de façon trop importante lors de l'étirage et du soufflage, les parois de la cavité du moule de soufflage sont maintenues à une température comprise entre 70 et 120° C. La température des parois de la cavité du moule est en outre régulée de telle façon qu'elle soit toujours inférieure à la température du matériau de la préforme enfermée dans ladite cavité.

Ainsi au cours du moulage, on évite au matériau constituant le récipient de se refroidir au dessous de sa température de transition vitreuse Tg.

Il faut préciser toutefois que la partie centrale du fond de moule qui est en contact avec la partie la plus épaisse du récipient est refroidie à une température comprise entre 10 et 50°C et que la partie des parois de la cavité du moule correspondant à la zone de jonction entre l'épaule du récipient et le col de celui-ci peut également être refroidie.(10 à 50°C)

- le taux de biétirage est compris entre 7 et 9, ce qui est faible par rapport aux taux d'étirage couramment mis en jeu pour le PET (10 à 13).

- la vitesse d'étirage longitudinal est inférieure à 500 mm/sec, valeur qui est notablement plus faible que les valeurs utilisées habituellement (de 650 à 850 mm/sec)

L'opération de moulage d'un récipient à partir d'une préforme va être décrite maintenant.

Une préforme préalablement chauffée à une température comprise entre 120 et 140°C est introduite dans la cavité d'un moule et maintenue en place par son col. Les parois de la cavité du moule sont maintenues à une température comprise entre 70 à 120°C, cette température étant inférieure à celle de la préforme.

Selon un premier mode de mis en oeuvre (voir figure 1), une tige d'étirage est introduite dans la préforme par son col et se déplace suivant l'axe longitudinal de celle-ci pour étirer longitudinalement le corps de la préforme. Le déplacement de la tige d'étirage est effectué jusqu'à ce que l'extrémité fermée de la préforme soit en contact avec le fond de la cavité du moule. Simultanèment à l'étirage, on souffle de l'air sous pression dans la préforme de façon à forcer le matériau constituant le récipient à venir en contact avec la cavité du moule pour en épouser la forme. La pression en fin de soufflage, à l'intérieur du récipient moulé, est comprise entre 20 et 40 bars, cette pression dépendant de la complexité de forme plus ou moins grande du récipient à fabriquer.

3

On évacue ensuite rapidement l'air du soufflage par mise à l'atmosphère du récipient, de façon à ce que la pression résiduelle à l'intérieur de celui-ci soit comprise entre 0 et 6 bars.

Puis, on souffle à nouveau de l'air sous pression dans le récipient contenu dans la cavité de moulage, la pression à la fin de ce second soufflage étant comprise entre 20 et 40 bars.

Enfin, on évacue rapidement l'air du second soufflage contenu dans le récipient par mise à l'atmosphère de celui-ci pour ramener sa pression interne à la pression atmosphérique et le récipient terminé est extrait du moule de soufflage. La température du récipient à sa sortie du moule est comprise entre 70 et 80°C, la détente rapide de l'air sous pression contenu dans le récipient ayant assuré son refroidissement par l'intérieur.

Le temps de séjour dans le moule, nécessaire pour obtenir un récipient à partir d'une préforme, est compris entre 4 et 5,5 secondes.

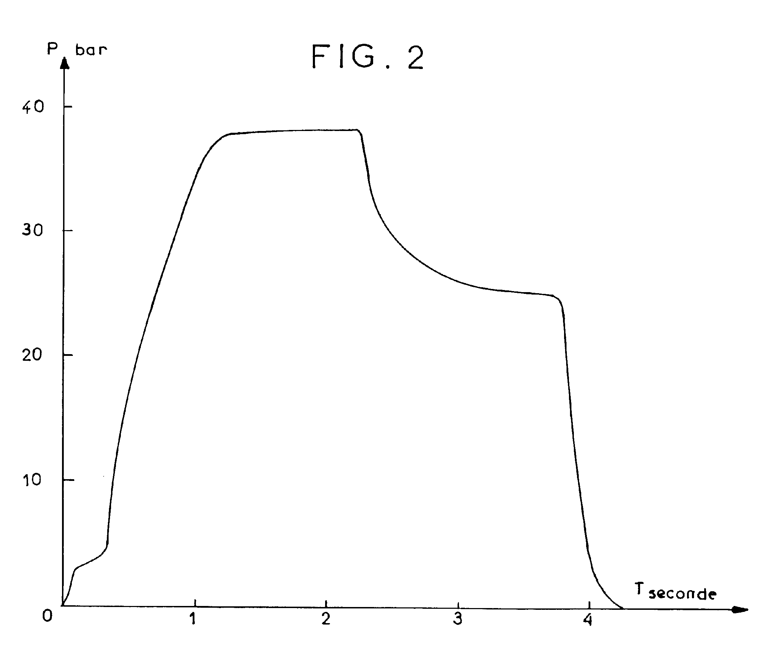

Selon un deuxième mode de mise en oeuvre du procédé (voir figure 2), la phase d'étirage est effectuée de la même façon que précédemment tandis que la phase de soufflage s'opère de la façon décrite ci-après. Simultanément à l'étirage, on souffle de l'air sous pression dans la préforme de façon à forcer le matériau constituant le récipient à venir en contact avec la cavité du moule pour en épouser la forme. La pression en fin de soufflage, à l'intérieur du récipient moulé est comprise entre 20 et 40 bars. Le récipient moulé contenu dans le moule est alors mis à l'atmosphère par l'intermédiaire de la tige d'étirage qui est creuse tandis que de l'air sous pression continue à être insufflé dans le récipient par une buse de soufflage. On crée ainsi une circulation d'air à l'intérieur du récipient formé tout en maintenant ce dernier en surpression (15 à 30 bars) par rapport à la pression atmosphérique. Puis, la circulation d'air est stoppée et on évacue rapidement l'air contenu dans le récipient. Enfin, le récipient terminé est extrait du moule.

La circulation d'air ainsi que la détente finale de l'air sous pression contenu dans le récipient ont refroidi ce dernier qui est à une température de 70 à 80°C à sa sortie du moule.

Le temps de séjour dans le moule, nécessaire pour obtenir un récipient à partir d'une préforme, est compris entre 4 et 5,5 secondes.

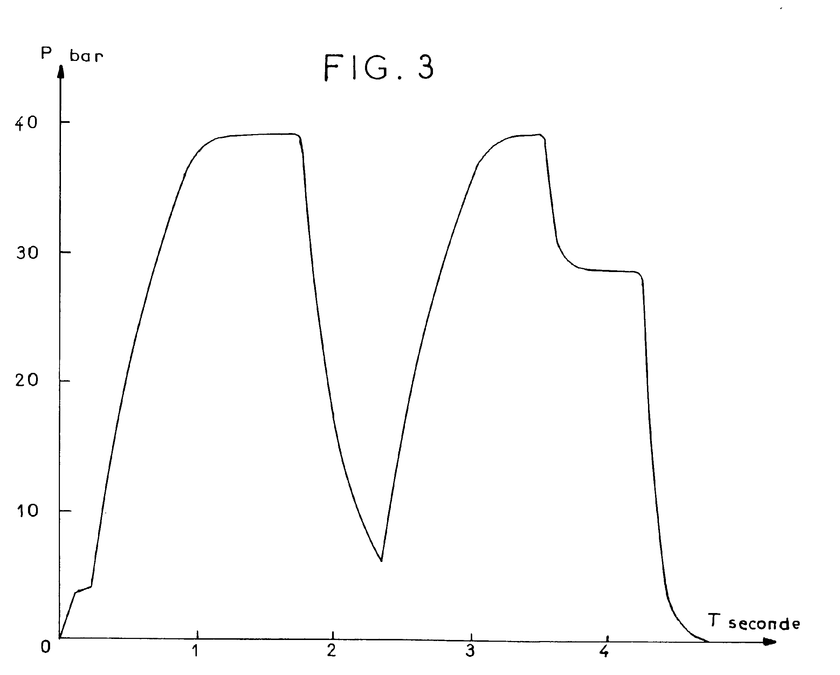

Selon un troisième mode de mise en oeuvre du procédé (voir figure 3), les phases d'étirage et de soufflage sont effectuées de la même façon que dans le premier mode de mise en oeuvre précédemment décrit. Mais, à la fin du second soufflage au cours duquel la pression finale est comprise entre 20 et 40 bars, le récipient moulé contenu dans le moule est mis à l'atmosphère par la tige d'étirage qui est creuse tandis que de l'air sous pression continue à être insufflé dans le récipient par une buse de soufflage.

On crée ainsi une circulation d'air à l'intérieur du récipient formé tout en le maintenant en surpression (15 à 30 bars) par rapport à la pression atmosphérique. Puis, la circulation d'air est stoppée et on fait chuter rapidement la pression dans le récipient jusqu'à la pression atmosphérique par évacuation de l'air. Enfin, le récipient terminé est extrait du moule.

Ici encore le temps de séjour dans le moule, nécessaire pour obtenir un récipient à partir d'une préforme, est compris entre 4 et 5,5 secondes.

L'avantage du procédé selon l'invention est qu'il permet la production, à cadence industrielle, de récipients en polyéthylénetéréphtalate résistant sans déformation notable au remplissage avec un liquide chaud dont la température atteint 85°C et peut même la dépasser légèrement (87°C). En effet, le temps de séjour dans le moule, nécessaire pour fabriquer un récipient à partir d'une préforme, est compris entre 4 et 5,5 secondes seulement, à comparer avec un temps de séjour de 2 à 3 secondes pour la fabrication de récipients destinés au remplissage avec un liquide froid.

Ci-après sont donnés différents exemples non limitatifs illustrant les différents modes de mise en oeuvre du procédé selon l'invention.

On fabrique des bouteilles de 1,5 litre de volume, pesant 57 grammes, en partant de préformes en PET amorphe obtenues par injection. Le PET utilisé, fabriqué par AKZO et commercialisé sous la référence D02.300, a une viscosité intrinsèque de 0,75 dl/g.

Les préformes sont chauffées dans un four à rayonnement infra-rouge de façon à porter le matériau qui les constitue à 130° C. Elles sont transférées ensuite et soufflées à 125° C dans un moule dont les parois de la cavité de moulage sont maintenues à une température comprise entre 105 et 110° C.

La vitessse d'étirage longitudinal est de 360 mm/seconde.

Lors de l'étirage-soufflage, le matériau est soumis à un taux d'étirage longitudinal de 2,21 et à un taux d'étirage transversal de 3,61, ce qui correspond à un taux d'étirage global de 7,98.

Dans une première série d'essais, qui correspond au premier mode de mise en oeuvre du procédé précédemment décrit, les préformes sont étirées par la tige d'élongation et soufflées par de l'air sous pression. La pression atteint 39 bars au bout de 1,10 seconde. La matière étirée est maintenue en contact avec les parois chaudes de la cavité de moulage pendant 0,64 seconde, sous la pression de 39 bars. Le récipient est alors mis à l'atmosphère et la pression chute de 39 bars à 6 bars en 0,58 seconde. Puis, on introduit à nouveau de l'air sous pression dans le récipient, la pression croissant de 6 bars à 39 bars en 0,88 seconde, la pression de 39 bars étant maintenue pendant 1,05 seconde. Le récipient est ensuite mis à l'atmosphère, la pression chutant de 39 bars jusqu'à la pression atmosphérique en 0,6 seconde, puis extrait du moule.

Le cycle de fabrication du récipient à partir de préformes par "double soufflage" dure au total 4,84 secondes.

Dans une deuxième série d'essais qui correspond au deuxième mode de mise en oeuvre du procédé précédemment décrit, les préformes sont étirées par la tige d'élongation et soufflées par de l'air sous pression. La pression atteint 38,5 bars au bout de 1,23 seconde. La matière étirée est maintenue en contact avec les parois chaudes de la cavité de moulage pendant 1,06 seconde, sous la pression de 38,5 bars. Le récipient est alors mis à l'atmosphère tandis que de l'air sous pression est insufflé dans ledit récipient, ce qui crée à l'intérieur de ce dernier une circulation d'air sous pression ou balayage. Au cours du balayage qui dure 1,5 seconde, la pression décroît et passe de 38,5 bars à 25 bars. Puis, l'insufflation d'air de balayage est stoppée, la pression chutant de 25 bars jusqu'à la pression atmosphérique en 0,45 seconde. Enfin, le récipient est extrait du moule.

Le cycle de fabrication des récipients à partir de préformes par "simple soufflage avec balayage" dure au total 4,24 secondes.

Dans une troisième série d'essais qui correspond au troisième mode de mise en oeuvre du procédé précédemment décrit, les préformes sont étirées par la tige d'élongation et soufflées par de l'air sous pression. La pression atteint 39 bars au bout de 1,10 seconde. La matière étirée est maintenue en contact avec les parois chaudes de la cavité de moulage pendant 0,64 seconde, sous la pression de 39 bars. Le récipient est alors mis à l'atmosphère et la pression chute de 39 bars à 6 bars en 0,58 secondes. Puis, on introduit à nouveau de l'air sous pression dans le récipient, la pression croissant de 6 bars à 39 bars en 0,88 seconde, la pression de 39 bars étant maintenue pendant 1,05 seconde. Le récipient est alors mis à l'atmosphère tandis que de l'air sous pression est insufflé dans ledit récipient, ce qui crée à l'intérieur de ce dernier une circulation d'air sous pression ou balayage. Au cours du balayage qui dure 0,68 seconde, la pression décroît et passe de 39 bars à 29 bars. Ensuite, l'insufflation d'air de balayage est stoppée, la pression chutant de 29 bars jusqu'à la pression atmosphérique en 0,5 seconde. Enfin, le récipient est extrait du moule.

Le cycle de fabrication de récipients à partir de préformes par "double soufflage avec balayage" dure au total 4,74 secondes.

Les caractéristiques des bouteilles obtenues par les trois modes de soufflage sont consignées dans le tableau I suivant.

TABLEAU I

|  | Double Soufflage | Simple Soufflage avec Balayage | Double Soufflage avec Balayage |
|---|---|---|---|
| Aspect | Transparent | Transparent | Transparent |
| Retrait Volumique après Remplissage à 85-87°C (en % par rapport au volume initial) | 0,5 | 1 | 0,8 |
| Diminution de diamètre du corps de la bouteille après remplissage à 85-87° C (en %) | 0,6 | 0,7 | 0,3 |
| Diminution de hauteur de la bouteille après remplissage à 85-87° C (en %) | 0,5 | 0,6 | 0,8 |

Une quatrième et cinquième séries d'essais ont été effectuées pour mettre en évidence l'importance de la température des préformes et de la température des parois de la cavité de moulage lors de l'étirage-soufflage.

Les préformes sont chauffées à 100° C dans un four à rayonnement infra-rouge puis étirées et soufflées à 90° C (au lieu de 125° C) dans une cavité de moulage dont les parois sont maintenues à 118 - 120° C (au lieu de 105 - 110° C). Dans ces essais, la température des parois de la cavité du moulage est supérieure à celle des préformes, contrairement aux essais précédents.

Par ailleurs, tous les autres paramètres demeurent inchangés : poids et forme des préformes et des récipients, matériau, vitesse et taux d'étirage, durée des cycle de fabrication.

Les caractéristiques des bouteilles obtenues lors des quatrièmes et cinquièmes séries d'essais sont consignées dans le tableau II suivant :

TABLEAU II

|  | Simple Soufflage avec Balayage | Double Soufflage avec Balayage |
|---|---|---|
| Aspect | Transparent | Transparent |
| Retrait Volumique après Remplissage à 85-87°C (en % par rapport au volume initial) | 3,4 | 2,8 |
| Diminution de diamètre du corps de la bouteille après remplissage à 85-87° C (en %) | 1,3 | 0,6 |
| Diminution de hauteur de la bouteille après remplissage à 85-87° C (en %) | 1,9 | 1,3 |

Il apparaît donc à la lecture des tableaux I et II que l'influence des températures respectives des préformes et des parois de la cavité de moulage est primordiale pour l'obtention de bouteilles présentant de faibles déformations lors du remplissage avec un liquide chaud.

**Revendications**

1. Procédé de fabrication de récipients en polyéthylènetéréphtalate (PET), à partir de préformes creuses comportant une extrémité ouverte et une extrémité fermée, aptes à supporter sans déformation notable des conditions thermiques relativement sévères, telles que celles rencontrées lors du remplissage avec un liquide chaud, caractérisé en ce qu'il comprend la succession des étapes suivantes :

   a) on chauffe rapidement le corps d'une préforme en PET amorphe de façon à ce qu'il atteigne une température de 120 à 140°C à laquelle un étirage longitudinal et un étirage transversal n'induisent pas de contrainte dans le matériau constituant le récipient, le col de la préforme déjà conformé à sa forme et à ses dimensions définitives n'étant pas chauffé ;

   b) on transfère la préforme chaude dans un moule dont les parois de la cavité de moulage sont chauffées et maintenues à une température inférieure à celle du corps de la préforme ;

   c) on étire longitudinalement la préforme, avec une vitesse d'étirage faible inférieure à 500 mm/seconde, ajustée pour induire le moins de contraintes possibles dans le matériau, et on l'expanse simultanément par soufflage au moyen d'un fluide gazeux sous pression, en général de l'air, de façon à ce qu'elle épouse la forme de la cavité de moulage pour former un récipient ;

   d) on évacue rapidement du récipient moulé le fluide gazeux sous pression ;

   e) enfin, on extrait du moule le récipient fabriqué.

2. Procédé selon la revendication 1, caractérisé en ce que la durée du chauffage du corps de la préforme est inférieure à une minute et de préférence égale à 40 secondes environ.

3. Procédé selon la revendication 1 ou 2, caractérisé en ce que les parois de la cavité de moulage sont maintenues à une température comprise entre 70 et 120°C, cette température étant toujours inférieure à celle du corps de la préforme.

4. Procédé selon la revendication 1 ou 2, caractérisé en ce que lors de l'étape c), le taux de biétirage mis en jeu pour transformer la préforme en récipient est compris entre 7 et 9.

5. Procédé selon l'une quelconque des revendications 1 à 4, caractérisé en ce que, lors de l'étape c), on souffle de l'air sous pression dans la préforme, la pression en fin de soufflage étant comprise entre 20 et 40 bars, on évacue ensuite rapidement l'air de soufflage de façon à ce que la pression résiduelle à l'intérieur du récipient moulé soit comprise entre 0 et 6 bars, puis on souffle à nouveau de l'air sous pression de façon à ce que la pression en fin de ce second soufflage soit comprise entre 20 et 40 bars.

6. Procédé suivant l'une quelconque des revendications 1 à 4, caractérisé en ce que, lors de l'étape c), on souffle de l'air sous pression dans la préforme, la pression en fin de soufflage étant comprise entre 20 et 40 bars, puis on assure une circulation d'air sous pression à l'intérieur du récipient moulé, cette circulation d'air s'effectuant sous une pression de 15 à 30 bars, enfin, on stoppe cette circulation d'air.

7. Procédé suivant l'une quelconque des revendications 1 à 4, caractérisé en ce que, lors de l'étape c), on souffle de l'air sous pression dans la préforme, la pression en fin de soufflage étant comprise entre 20 et 40 bars, on évacue alors rapidement l'air de soufflage de façon à ce que la pression résiduelle à l'intérieur du récipient moulé soit comprise entre 0 et 6 bars, ensuite on souffle à nouveau de l'air sous pression de façon à ce que la pression, en fin de ce second soufflage soit comprise entre 20 et 40 bars, puis on assure une circulation d'air sous pression à l'intérieur du récipient moulé, cette circulation d'air se faisant sous une pression de 15 à 30 bars, enfin on stoppe cette circulation d'air.

8. Procédé selon l'une quelconque des revendications 1 à 7, caractérisé en ce que le temps de séjour dans la cavité de moulage, nécessaire pour obtenir un récipient moulé à partir d'une préforme, est compris entre 4 et 5,5 secondes.

**Patentansprüche**

1. Verfahren zum Herstellen von Behältern aus Polyethylenterephthalat (PET), ausgehend von vorgeformten hohlen Formteilen mit einem offenen Ende und einem geschlossenen Ende, die relativ starken thermischen Belastungen, wie sie beim Füllen mit einer heißen Flüssigkeit auftreten, ohne merkliche Verformung standhalten können, dadurch gekennzeichnet, daß nacheinander folgende Maßnahmen angewandt werden:
   a) ein Formteil aus amorphem PET wird in der Weise erwärmt, daß es eine Temperatur von 120° bis 140°C annimmt, bei der eine Längsdehnung und eine Querdehnung keine Spannung in dem Behältermaterial hervorruft, wobei der Hals des Formteils, der bereits seine endgültige Form und seine endgültigen Abmessungen aufweist, nicht erwärmt wird;
   b) das gesamte Formteil wird in einem Formwerkzeug angeordnet, dessen Wände, die den Formungshohlraum bilden, erwärmt sind und auf einer niedrigeren Temperatur als der Körper des Formteils gehalten werden;
   c) das Formteil wird in Längsrichtung gezogen, und zwar mit einer Ziehgeschwindigkeit, die etwas geringer als 500 mm/s und so eingestellt ist, daß in dem Material so wenig wie möglich Spannungen hervorgerufen werden, und gleichzeitig wird es durch Aufblasen mittels eines gasförmigen Druckfluids, im allgemeinen Luft, so ausgedehnt, daß es sich der Form des Formungshohlraums zur Bildung eines Behälters anpaßt;
   d) aus dem geformten Behälter wird das gasförmige Druckfluid rasch evakuiert;
   e) und schließlich wird der fertige Behälter aus dem Formwerkzeug entfernt.

2. Verfahren nach Anspruch 1, dadurch gekennzeichnet, daß die Dauer der Erwärmung des Körpers des Formteils weniger als eine Minute und vorzugsweise etwa 40 Sekunden beträgt.

3. Verfahren nach Anspruch 1 oder 2, dadurch gekennzeichnet, daß die Wände des Formungshohlraums auf einer Temperatur gehalten werden, die zwischen 70 und 120°C liegt und ständig niedriger als die des Körpers des Formteils ist.

**4.** Verfahren nach Anspruch 1 oder 2, dadurch gekennzeichnet, daß bei der Maßnahme c) das Maß der Doppeldehnung, die zur Umformung des Formteils in den Behälter bewirkt wird, zwischen 7 und 9 liegt.

**5.** Verfahren nach einem der Ansprüche 1 bis 4, dadurch gekennzeichnet, daß bei der Maßnahme c) Druckluft in das Formteil geblasen wird, deren Druck am Ende des Blasens zwischen 20 und 40 bar liegt, daß anschließend die Blasluft so rasch evakuiert wird, daß der Restdruck im Inneren des geformten Behälters zwischen 0 bis 6 bar liegt, daß dann erneut Druckluft in der Weise eingeblasen wird, daß der Druck am Ende des zweiten Blasvorgangs zwischen 20 bis 40 bar liegt.

**6.** Verfahren nach einem der Ansprüche 1 bis 4, dadurch gekennzeichnet, daß bei der Maßnahme c) Druckluft in das Formteil geblasen wird, deren Druck am Ende des Blasens zwischen 20 und 40 bar liegt, daß dann eine Druckluftströmung im Inneren des geformten Behälters mit einem Druck von 5 bis 30 bar ausgebildet wird und daß schließlich diese Luftströmung angehalten wird.

**7.** Verfahren nach einem der Ansprüche 1 bis 4, dadurch gekennzeichnet, daß bei der Maßnahme c) Druckluft in das Formteil geblasen wird, deren Druck am Ende des Blasens zwischen 20 bis 40 bar liegt, daß die Blasluft dann so rasch evakuiert wird, daß der Restdruck im Inneren des geformten Behälters zwischen 0 und 6 bar liegt, daß anschließend die Druckluft erneut mit einem Druck eingeblasen wird, der am Ende des zweiten Blasvorgangs zwischen 20 und 40 bar liegt, daß dann eine Druckluftströmung im Inneren des geformten Behälters mit einem Druck von 15 bis 30 bar ausgebildet wird und daß schließlich die Luftströmung angehalten wird.

**8.** Verfahren nach einem der Ansprüche 1 bis 7, dadurch gekennzeichnet, daß die Verweilzeit in dem Formungshohlraum, die erforderlich ist, um einen geformten Behälter aus einem Formteil zu erhalten, zwischen 4 und 5,5 Sekunden liegt.

## Claims

**1.** A process for the manufacture of polyethyleneterephtalate (PET) containers from hollow preforms having an open end and a closed end, said containers being able to withstand relatively severe thermal conditions encountered when the container is filled with a hot liquid, without appreciable deformation, characterized by comprising the suite of following steps :
a) rapidly heating the body of an amorphous PET preform so that it has a temperature of 120°C to 140°C at which a longitudinal stretching and a transverse stretching cause no stresses in the container material, the neck of said preform which has been previously conformed to its final size and shape being not heated ;
b) tranferring said hot preform into a mold, walls of which are heated and maintained at a temperature lower than the temperature of the preform body ;
c) longitudinally stretching the preform, with a low stretching rate less than 500 mm/sec, adapted so as to cause stresses as less as possible in the material and simultaneously expanding it by blow-molding using a pressurized gaseous fluid, generally air, so as to mold the preform body to the shape of the mold cavity so as to shape a container;
d) rapidly evacuating the pressurized gaseous fluid from the molded container ;
e) finally removing said manufactured container from the mold.

**2.** A process according to claim 1, characterized in that the time of heating of the preform body is less than 1 minute, and preferably equal to about 40 secondes.

**3.** A process according to claim 1 or 2, characterized in that the walls of the mold cavity are maintained at a temperature of between 70°C and 120°C and the temperature is continuously lower than that of the preform body.

**4.** A process according to claim 1 or 2, characterized in that, during step c), the biaxial stretching rate used for the transformation of the preform to a container is comprised between 7 and 9.

**5.** A process according to anyone of claims 1 to 4, characterized in that, during step c), pressurized air is blown into the preform, the pressure at the end of the blowing being comprised between 20 and 40 bars, then the pressurized air is rapidly evacuated from the molded container so that the residual pressure within the molded container is between 0 and 6 bars, then pressurized air is again blown so that the pressure at the end to of said second blowing is comprised between 20 and 40 bars.

6.  A process according to anyone of claims 1 to 4, characterized in that, during step c), pressurized air is blown into the preform, the pressure at the end of the blowing being comprised between 20 and 40 bars, then the pressurized air is forced to flow under pressure within the molded container, said air flow being under a pressure of 15 to 30 bars, finally said air flow is stopped.

7.  A process according to anyone of claims 1 to 4, characterized in that, during step c), pressurized air is blown into the preform, the pressure at the end of the blowing being comprised between 20 and 40 bars, then the pressurized air is rapidly evacuated so that the residual pressure within the molded container is comprised between 0 and 6 bars, then pressurized air is again blown so that the pressure at the end of said second blowing is comprised between 20 and 40 bars, then the pressurized air is forced to flow within the molded container, said air flow being under a pressure of from 15 to 30 bars, finally the air flow is stopped.

8.  A process according to anyone of claims 1 to 7, characterized in that the time of presence in the molding cavity, which is necessary for obtaining a molded container from a preform, is from 4 to 5,5 seconds.

EP 0 406 146 B1

# FIG.1

# FIG . 2

EP 0 406 146 B1

FIG. 3

EP 0 406 146 B1